# FASCICULE DE BREVET EUROPEEN

(11) **EP 2 996 896 B1**
(45) Date de publication et mention de la délivrance du brevet: **22.02.2017**
(21) Numéro de dépôt: 14727883.2
(22) Date de dépôt: 05.05.2014
(51) Int. Cl.: B60K 35/00, B60K 37/00, B60K 37/04, G02B 27/01, B60R 11/02, B60R 11/00

(54) **DISPOSITIF D'AFFICHAGE TÊTE HAUTE À MONTAGE SIMPLIFIÉ ET RÉFLEXION RÉDUITE, POUR UN VÉHICULE**
HEAD-UP-DISPLAY-VORRICHTUNG MIT VEREINFACHTER MONTAGE UND REDUZIERTER REFLEKTION FÜR EIN FAHRZEUG
HEADS-UP DISPLAY DEVICE WITH SIMPLIFIED MOUNTING AND REDUCED REFLECTION, FOR A VEHICLE

(30) Priorité: 15.05.2013 FR 1354367
(43) Date de publication de la demande: 23.03.2016
(73) Titulaire: Peugeot Citroën Automobiles SA, 78140 Vélizy Villacoublay (FR)
(72) Inventeur: VALDUGA, Frederic, F-25200 Montbeliard (FR); BALLANDRAS, Philippe, F-25700 Valentigney (FR); MARTINET, Gilles, F-70400 Mignavillers (FR); BEAUNAY, Arnaud, F-25230 Seloncourt (FR)
(74) Mandataire: Jeannin, Laurent Jean-Pierre
(86) Numéro de dépôt international: PCT/FR2014/051055
(87) Numéro de publication internationale: WO 2014/184464

(56) Documents cités:
- DE-A1-102005 028 282
- DE-A1-102006 025 386
- US-A- 5 028 912
- US-A- 5 237 455
- US-A1- 2013 027 781

## Description

L'invention concerne les planches de bord qui équipent certains véhicules, généralement de type terrestre, et plus précisément les dispositifs d'affichage de type dit « tête haute » qui équipent certaines de ces planches de bord. Un dispositif d'affichage comprenant les caractéristiques du préambule de la revendication 1 est connu du document US 5 237 455 A.

Certains dispositifs d'affichage tête haute comportent un support destiné à être solidarisé à une planche de bord en un endroit prédéfini situé sous une ouverture dédiée, après avoir été introduit par cette dernière (par le dessus), et auquel on vient solidariser fixement un boîtier, comportant une source d'images d'information(s) et une lame transparente. La source est placée sous la planche de bord et chargée de générer des images d'information(s) au travers de l'ouverture dédiée définie dans la planche de bord. La lame transparente peut être déplacée d'une position rentrée, dans laquelle elle n'est généralement pas visible, à une position déployée, dans laquelle elle est placée en grande partie au dessus de la planche de bord et orientée vers un passager (généralement le conducteur), et sur laquelle sont projetées les images d'information(s).

L'ouverture dédiée est une découpe définie dans la planche de bord et dont les dimensions sont supérieures à celles du support et du boîtier afin de permettre leur introduction de haut en bas, la solidarisation du support à la planche de bord et la solidarisation du boîtier au support. Une fois ces solidarisations réalisées, une pièce rapportée (parfois appelée « enjoliveur »), comprenant une ouverture centrale et servant à masquer les moyens de solidarisation à la périphérie de l'ouverture dédiée, est solidarisée au support et/ou au boîtier après avoir été placée dans cette ouverture dédiée par le dessus.

Cet enjoliveur produit des reflets sur le pare-brise qui peuvent gêner certains conducteurs.

Par ailleurs, les installations et solidarisations (par vissage) du support puis du boîtier devant être réalisées par le dessus de la planche de bord, elles s'avèrent assez difficiles à réaliser du fait qu'elles doivent se faire quasiment en aveugle dans une zone peu accessible aux techniciens, et que le dispositif d'affichage tête haute pèse environ 800 grammes. Cette difficulté ne fait en outre que croître du fait de l'accumulation des efforts provoqués par la répétition des installations et solidarisations successives.

De plus, les démontage et remontage d'un dispositif d'affichage tête haute lors d'une réparation s'avèrent encore plus compliqués du fait que le pare-brise du véhicule, le volant et les sièges sont généralement présents et donc rendent plus difficiles son accessibilité par le dessus de la planche de bord. Le risque de dégradation de la planche de bord et/ou du pare-brise est donc assez élevé.

L'invention a donc notamment pour but d'améliorer la situation.

Elle propose notamment à cet effet un dispositif d'affichage de type tête haute, destiné à équiper une planche de bord d'un véhicule, et comprenant :
- un masque propre à être solidarisé fixement à la planche de bord autour d'une ouverture, et
- un support auquel est solidarisé fixement un boîtier, comportant une source, propre à générer des image d'information(s), et une lame transparente, propre à afficher ces images générées, une fois déployée au travers de l'ouverture, et qui est propre à être introduit avec le boîtier sous la planche de bord via une autre ouverture que comprend cette dernière, à être solidarisé fixement à au moins une patte de fixation d'un élément du véhicule situé sous la planche de bord, et à être couplé au masque.

Grâce à la solidarisation du masque à la planche de bord, puis à l'introduction du support et du boîtier sous la planche de bord via l'autre ouverture, il est désormais possible de définir une ouverture dont les dimensions sont notablement inférieures à celles de l'ensemble support-boîtier et juste suffisantes au déploiement de l'écran transparent et à la projection des images d'information(s) sur ce dernier.

Le dispositif selon l'invention peut comporter d'autres caractéristiques qui peuvent être prises séparément ou en combinaison, et notamment :
- son masque peut être propre à être solidarisé fixement à la planche de bord après avoir été introduit sous la planche de bord via l'autre ouverture; 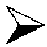 son masque peut comprendre des premiers moyens de couplage propres à coopérer avec des seconds moyens de couplage que comprend son support pour assurer leur couplage et un maintien du support par rapport au masque, notamment pendant son introduction sous la planche de bord et pendant sa solidarisation à la patte de fixation de l'élément ;
   o les premiers moyens de couplage peuvent être agencés sous la forme de deux nervures, et les seconds moyens de couplage peuvent être agencés sous la forme de deux rainures propres à recevoir respectivement les nervures ;
- son support peut comprendre au moins une patte de fixation propre à être solidarisée fixement à la patte de fixation de l'élément ;
- son boîtier peut être vissé sur son support avant l'introduction sous la planche de bord.

L'invention propose également une planche de bord destinée à équiper un véhicule et comprenant un dispositif d'affichage du type de celui présenté ci-avant.

L'invention propose également un véhicule, éventuellement de type automobile, et comprenant une planche de bord du type de celle présentée ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes et les niveaux de gris), sur lesquels:
- la figure 1 illustre schématiquement, dans une vue en perspective du côté de l'habitacle, une partie d'un exemple de planche de bord de véhicule automobile en cours d'équipement avec un exemple de réalisation de dispositif d'affichage selon l'invention,
- la figure 2 illustre schématiquement, dans une vue en coupe dans un plan longitudinal, la planche de bord de la figure 1 une fois le dispositif d'affichage totalement installé, et
- la figure 3 illustre schématiquement, dans une vue en coupe dans un plan longitudinal, la planche de bord de la figure 1 une fois le masque du dispositif d'affichage installé.

L'invention a pour but de proposer un dispositif d'affichage DA de type tête haute et destiné à équiper une planche de bord PB d'un véhicule.

Dans ce qui suit, on considère, à titre d'exemple non limitatif, que le véhicule est de type automobile. Il s'agit par exemple d'une voiture, d'un véhicule utilitaire, d'un autocar ou d'un camion. Mais l'invention n'est pas limitée à ce type de véhicule. Elle concerne en effet tout type de véhicule terrestre ou maritime (ou fluvial) pouvant circuler et comportant une planche de bord pouvant être équipée d'un dispositif d'affichage de type tête haute.

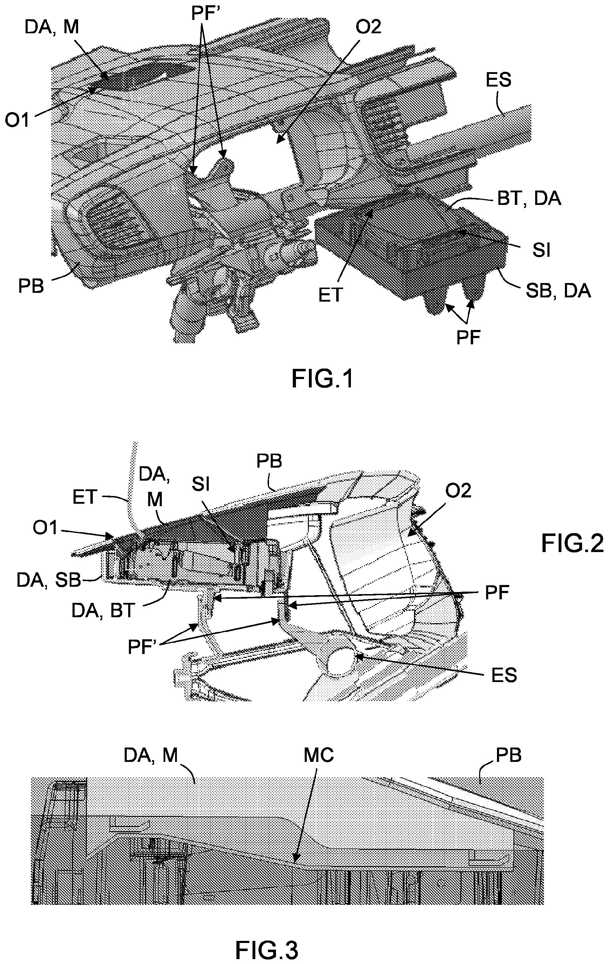

On a schématiquement représenté sur les figures 1 à 3 une partie d'une planche de bord PB de véhicule, équipée d'un exemple de réalisation de dispositif d'affichage DA selon l'invention.

Comme illustré, un dispositif d'affichage DA, selon l'invention, comprend au moins un masque (ou enjoliveur) M et un boîtier BT comportant une source SI propre à générer des images d'information(s) et une lame transparente LT.

Le masque M est agencé de manière à être solidarisé fixement à la planche de bord PB autour d'une première ouverture 01. Cette solidarisation peut, par exemple, se faire par soudage. Mais elle pourrait également se faire par vissage.

Ce masque M est destiné à masquer les moyens de fixation du boîtier BT sur le support SB et comprend une ouverture centrale destinée à permettre le placement de l'écran transparent ET dans une position déployée (illustrée sur la figure 2) et le transfert des images de la source SI vers l'écran transparent ET.

Le masque M est par exemple réalisé par moulage dans un matériau plastique ou synthétique rigide, comme par exemple l'ABS-PC (mélange d'Acrylonitrile Butadiène Styrène (ou ABS) et de Polycarbonate (ou PC)).

On notera que dans l'exemple non limitatif illustré, la première ouverture 01 est réalisée sur le dessus de la planche de bord PB au niveau où est réalisée une seconde ouverture 02 destinée à recevoir le combiné de tableau de bord du véhicule dans la zone dédiée au conducteur. Mais dans une variante de réalisation la première ouverture 01 pourrait être réalisée sur le dessus de la planche de bord PB au niveau où est réalisée une seconde ouverture destinée à recevoir un autre équipement dans une partie centrale, comme par exemple le combiné central.

De préférence, le masque M est propre à être solidarisé fixement à la planche de bord PB après avoir été introduit sous la planche de bord PB via la seconde ouverture 02. Cela est particulièrement avantageux car cela permet de limiter notablement les dimensions du masque M et donc de minimiser les reflets induits par ce dernier (M). Mais dans une variante de réalisation le masque M pourrait être solidarisé à la planche de bord PB après avoir été introduit par le dessus de la planche de bord PB via la première ouverture 01.

Le boîtier BT est solidarisé fixement au support SB, avant que ce dernier (SB) ne soit solidarisé fixement à au moins une patte de fixation PF' d'un élément ES du véhicule, situé sous la planche de bord PB, et couplé au masque M. Cette solidarisation peut, par exemple, se faire par vissage ou par clippage. Cela permet de faciliter notablement le travail des techniciens qui sont chargés d'installer (ou monter) les dispositifs d'affichage DA dans les planches de bord PB.

La lame transparente LT est propre à afficher les images qui sont générées par la source SI une fois qu'elle a été déployée au travers de la première ouverture 01. Cette lame transparente LT peut être, en effet, soit rangée dans le boîtier BT ou rabattue contre la source SI en obstruant l'ouverture centrale du masque M, soit déployée. Le déplacement de cette lame transparente LT est assuré par un mécanisme motorisé logé dans le boîtier BT et alimenté électriquement par le réseau électrique du véhicule.

Cette lame transparente LT peut, par exemple, être réalisée en polycarbonate (ou PC) transparent.

La source SI peut se présenter sous n'importe quelle forme connue de l'homme de l'art dès lors qu'elle permet de projeter des images d'information(s) sur la lame transparente LT.

Parmi les nombreuses informations qui peuvent faire partie d'une image d'information(s) générée par la source SI, on peut notamment citer l'heure en cours, la vitesse du véhicule, le nombre de kilomètres effectués depuis la dernière mise à zéro du compteur kilométrique journalier, l'autonomie du véhicule en terme de quantité de carburant ou de kilomètres, des informations de localisation et/ou de navigation (guidage, par exemple par satellites), la vitesse maximale autorisée sur la voie de circulation empruntée, ou la vitesse sélectionnée sur le dispositif de limitation de vitesse ou de régulation de vitesse.

Le support SB est introduit avec le boîtier BT sous la planche de bord PB via la seconde ouverture 02, puis il (SB) est couplé au masque M et déplacé vers l'arrière jusqu'à ce que le boîtier BT soit situé sous l'ouverture centrale du masque M. Enfin, le support SB est solidarisé à au moins une patte de fixation PF' d'un élément ES du véhicule.

Cette introduction du support et du boîtier BT sous la planche de bord PB via la seconde ouverture 02 est particulièrement avantageuse, car elle permet de définir une première ouverture 01 dont les dimensions sont notablement inférieures à celles de l'ensemble support-boîtier et juste suffisantes au déploiement de l'écran transparent ET et à la projection des images d'information(s) sur ce dernier (ET). On peut ainsi avantageusement minimiser les dimensions du masque M et donc minimiser les reflets qui sont induits par ce dernier (M). En outre, cette introduction permet de faciliter notablement le travail des techniciens qui sont chargés d'installer (ou monter) les dispositifs d'affichage DA dans les planches de bord PB, du fait que la solidarisation ne se fait plus en aveugle et que le support SB n'a plus besoin d'être porté par le technicien pendant sa solidarisation.

Le support SB est par exemple réalisé par moulage dans un matériau plastique ou synthétique rigide, comme par exemple le PP-TD20 (homopolymère Polypropylène).

Comme cela est partiellement illustré sur la figure 3, le masque M peut avantageusement comprendre des premiers moyens de couplage MC propres à coopérer avec des seconds moyens de couplage (non représentés) qui sont définis sur deux faces latérales du support SB (préférentiellement parallèles entre elles). Cette coopération est destinée à assurer le couplage du support SB au masque M, et le maintien et le guidage du support SB par rapport au masque M, notamment pendant son introduction sous la planche de bord PB et pendant sa solidarisation à la (chaque) patte de fixation PF' de l'élément ES.

A titre d'exemple non limitatif, les premiers moyens de couplage MC peuvent être agencés sous la forme de deux nervures sensiblement identiques et sensiblement parallèles entre elles. Dans ce cas, les seconds moyens de couplage peuvent être agencés sous la forme de deux rainures propres à recevoir respectivement les deux nervures MC. Chacune de ces deux rainures peut, par exemple, être définie par une paire de nervures (ou protubérances) parallèles entre elles ou bien par un logement concave. Mais dans une variante de réalisation les seconds moyens de couplage MC pourraient être agencés sous la forme de deux nervures sensiblement identiques et sensiblement parallèles entre elles, et les premiers moyens de couplage pourraient être agencés sous la forme de deux rainures propres à recevoir respectivement les deux nervures MC.

On notera qu'afin de permettre la solidarisation du support SB à une ou plusieurs pattes de fixation PF' implantées sous la planche de bord PB, le support SB peut lui-même comprendre une ou plusieurs pattes de fixation PF propres à être solidarisées fixement et respectivement aux autres pattes de fixation PF'. Cette solidarisation peut, par exemple, se faire par vissage via la seconde ouverture 02. Mais elle pourrait également se faire par clippage.

Dans l'exemple illustré sur les figures 1 et 2, le support SB comprend deux pattes de fixation PF placées symétriquement de part et d'autre d'un plan longitudinal médian sur une partie avant et une patte de fixation PF placée sur ce plan longitudinal médian sur une partie centrale, et le véhicule comprend une barre transversale constituant l'élément ES et à laquelle est solidarisée une monture comprenant une première partie définissant deux pattes de fixation avant PF' placées symétriquement de part et d'autre du plan longitudinal médian et une seconde partie définissant une patte de fixation centrale PF' placée sur le plan longitudinal médian.

Cette monture est par exemple réalisée par moulage dans un matériau plastique ou synthétique rigide.

Pour installer (ou monter) un dispositif d'affichage DA dans une planche de bord PB, on commence de préférence par introduire le masque M sous la planche de bord PB via la seconde ouverture 02, puis on le solidarise fixement à la planche de bord PB autour de la première ouverture 01. Ensuite, on introduit le support SB, préalablement équipé fixement du boîtier BT, sous la planche de bord PB via la seconde ouverture 02 afin de le coupler au masque M et jusqu'à ce que le boîtier BT soit situé sous l'ouverture centrale du masque M (pour permettre la projection des images d'information(s) sur l'écran transparent ET lorsqu'il aura été déployé au travers de cette ouverture centrale et donc au travers de la première ouverture O1). Puis, on solidarise fixement le support SB à au moins une patte de fixation PF' d'un élément ES du véhicule qui est situé sous la planche de bord PB. On peut ensuite installer le combiné (ici) du tableau de bord dans la seconde ouverture 02.

## Revendications

1. Dispositif d'affichage (DA) pour une planche de bord (PB) d'un véhicule, le dispositif comprenant i) un masque (M) propre à être solidarisé fixement à ladite planche de bord (PB) autour d'une ouverture (01), et ii) un support (SB) auquel est solidarisé fixement un boîtier (BT) comportant une source (SI), propre à générer des image d'information(s), et une lame transparente (LT), propre à afficher lesdites images générées une fois déployée au travers de ladite ouverture (O1), **caractérisé en ce que** le support est propre à être introduit avec ledit boîtier (BT) sous ladite planche de bord (PB) via une autre ouverture (02) que comprend cette dernière (PB), à être solidarisé fixement à au moins une patte de fixation (PF') d'un élément (ES) dudit véhicule situé sous ladite planche de bord (PB), et à être couplé audit masque (M).

2. Dispositif selon la revendication 1, **caractérisé en ce que** ledit masque (M) est propre à être solidarisé fixement à ladite planche de bord (PB) après avoir été introduit sous ladite planche de bord (PB) via ladite autre ouverture (02).

3. Dispositif selon la revendication 2, **caractérisé en ce que** ledit masque (M) comprend des premiers moyens de couplage (MC) propres à coopérer avec des seconds moyens de couplage que comprend ledit support (SB) pour assurer leur couplage et un maintien dudit support (SB) par rapport audit masque (M), notamment pendant son introduction sous ladite planche de bord (PB) et pendant sa solidarisation à ladite patte de fixation (PF') dudit élément (ES).

4. Dispositif selon la revendication 3, **caractérisé en ce que** lesdits premiers moyens de couplage (MC) sont agencés sous la forme de deux nervures, et lesdits seconds moyens de couplage sont agencés sous la forme de deux rainures propres à recevoir respectivement lesdites nervures.

5. Dispositif selon l'une des revendications 1 à 4, **caractérisé en ce que** ledit support (SB) comprend au moins une patte de fixation (PF) propre à être solidarisée fixement à ladite patte de fixation (PF') dudit élément (ES).

6. Dispositif selon l'une des revendications 1 à 5, **caractérisé en ce que** ledit boîtier (BT) est vissé sur ledit support (SB) avant l'introduction sous ladite planche de bord (PB).

7. Planche de bord (PB) pour un véhicule, **caractérisée en ce qu'**elle comprend un dispositif d'affichage (DA) selon l'une des revendications précédentes.

8. Véhicule, **caractérisé en ce qu'**il comprend une planche de bord (PB) selon la revendication 7.

9. Véhicule selon la revendication 8, **caractérisé en ce qu'**il est de type automobile.

## Patentansprüche

1. Anzeigevorrichtung (DA) für ein Armaturenbrett (PB) eines Fahrzeugs, wobei die Vorrichtung Folgendes umfasst
i) eine Maske (M), die geeignet ist, fest mit dem Armaturenbrett (PB) um eine Öffnung (O1) befestigt zu werden, und
ii) einen Träger (SB), mit dem ein Gehäuse (BT) fest verbunden ist, das eine Quelle (SI) umfasst, die geeignet ist, Bilder der Information(en) zu erzeugen, und ein durchsichtiges Blatt (LT), das geeignet ist, die erzeugten Bilder anzuzeigen, sobald es durch die Öffnung (O1) ausgebreitet ist, **dadurch gekennzeichnet, dass** der Träger geeignet ist, mit dem Gehäuse (BT) unter das Armaturenbrett (PB) über eine andere Öffnung (02), die dieses (PB) umfasst, eingeführt zu werden, fest mit mindestens einer Befestigungspratze (PF') eines Elements (ES) des Fahrzeugs, das unter dem Armaturenbrett (PB) liegt, verbunden und mit der Maske (M) gekoppelt zu sein.

2. Vorrichtung nach Anspruch 1, **dadurch gekennzeichnet, dass** die Maske (M) geeignet ist, fest mit dem Armaturenbrett (PB) verbunden zu sein, nachdem sie unter dem Armaturenbrett (PB) über die andere Öffnung (02) eingeführt wurde.

3. Vorrichtung nach Anspruch 2, **dadurch gekennzeichnet, dass** die Maske (M) erste und zweite Kopplungsmittel (MC) umfasst, die geeignet sind, mit zweiten Kopplungsmitteln zusammenzuwirken, die der Träger (SB) umfasst, um ihr Koppeln und ein Halten des Trägers (SB) in Bezug zu der Maske (M) insbesondere während seines Einführens unter dem Armaturenbrett (PB) und während seines festen Verbindens mit der Befestigungspratze (PF') des Elements (ES) sicherzustellen.

4. Vorrichtung nach Anspruch 3, **dadurch gekennzeichnet, dass** die ersten Kopplungsmittel (MC) in der Form von zwei Rippen angeordnet sind, und dass die zweiten Kopplungsmittel in der Form von zwei Nuten, die geeignet sind, jeweils die Rippen aufzunehmen, angeordnet sind.

5. Vorrichtung nach einem der Ansprüche 1 bis 4, **dadurch gekennzeichnet, dass** der Träger (SB) mindestens eine Befestigungspratze (PF) umfasst, die geeignet ist, fest mit der Befestigungspratze (PF') des Elements (ES) verbunden zu sein.

6. Vorrichtung nach einem der Ansprüche 1 bis 5, **dadurch gekennzeichnet, dass** das Gehäuse (BT) auf den Träger (SB) vor dem Einführen unter dem Armaturenbrett (PB) geschraubt wird.

7. Armaturenbrett (PB) für ein Fahrzeug, **dadurch gekennzeichnet, dass** es eine Anzeigevorrichtung (DA) nach einem der vorhergehenden Ansprüche umfasst.

8. Fahrzeug, **dadurch gekennzeichnet, dass** es ein Armaturenbrett (PB) nach Anspruch 7 umfasst.

9. Fahrzeug nach Anspruch 8, **dadurch gekennzeichnet, dass** es ein Fahrzeug des Typs Kraftfahrzeug ist.

## Claims

1. A display device (DA) for a vehicle dashboard (PB), the device including
i) a mask (M) suitable for being fixedly secured to said dashboard (PB) around an opening (01), and
ii) a support (SB) to which there is fixedly secured a housing (BT) comprising a source (SI) suitable for generating information images, and a transparent strip (LT), suitable for displaying said generated images once deployed through said opening (01), **characterized in that** the support is suitable for being introduced with said housing (BT) beneath said dashboard (PB) via another opening (02) which the latter (PB) includes, to be fixedly secured to at least one fixing tab (PF') of an element (ES) of said vehicle situated beneath said dashboard (PB), and to be coupled to said mask (M).

2. The device according to claim 1, **characterized in that** said mask (M) is suitable for being fixedly secured to said dashboard (PB) after having been introduced beneath said dashboard (PB) via said other opening (O2).

3. The device according to claim 2, **characterized in that** said mask (M) includes first coupling means (MC) suitable for cooperating with second coupling means which said support (SB) includes to ensure their coupling and a retaining of said support (SB) with respect to said mask (M), in particular during its introduction beneath said dashboard (PB) and during its securing to said fixing tab (PF') of said element (ES).

4. The device according to claim 3, **characterized in that** said first coupling means (MC) are arranged in the form of two ribs, and said second coupling means are arranged in the form of two grooves suitable for receiving said ribs respectively.

5. The device according to one of claims 1 to 4, **characterized in that** said support (SB) includes at least one fixing tab (PF) suitable to be fixedly secured to said fixing tab (PF') of said element (ES).

6. The device according to one of claims 1 to 5, **characterized in that** said housing (BT) is screwed on said support (SB) before the introduction beneath said dashboard (PB).

7. A dashboard (PB) for a vehicle, **characterized in that** it includes a display device (DA) according to one of the preceding claims.

8. A vehicle, **characterized in that** it includes a dashboard (PB) according to claim 7.

9. The vehicle according to claim 8, **characterized in that** it is of the automobile type.
